(19) Europäisches Patentamt
European Patent Office
Office européen des brevets

(11) **EP 3 246 692 B1**

(12) **FASCICULE DE BREVET EUROPEEN**

(45) Date de publication et mention
de la délivrance du brevet:
**20.01.2021 Bulletin 2021/03**

(51) Int Cl.:
***G01N 15/02*** (2006.01)          ***G01W 1/14*** (2006.01)
***G01N 15/00*** (2006.01)          ***G01N 15/14*** (2006.01)

(21) Numéro de dépôt: **16290084.9**

(22) Date de dépôt: **16.05.2016**

(54) **PROCÉDÉ ET DISPOSITIF DE MESURE DU DIAMÈTRE ÉQUIVALENT D'UNE GOUTTE D'EAU**

VERFAHREN UND VORRICHTUNG ZUM MESSEN EINES DURCHMESSERS, DER DEM EINES WASSERTROPFENS ENTSPRICHT

METHOD AND DEVICE FOR MEASURING THE EQUIVALENT DIAMETER OF A WATER DROP

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**22.11.2017 Bulletin 2017/47**

(73) Titulaire: **Ecole Nationale des Ponts et Chaussées**
**77455 Marne La Vallée Cedex 2 (FR)**

(72) Inventeurs:
• **Gires, Auguste**
**92330 Sceaux (FR)**
• **Schertzer, Daniel**
**75004 Paris (FR)**
• **Tchiguirinskaia, Ioulia**
**75004 Paris (FR)**

(74) Mandataire: **Brevalex**
**95, rue d'Amsterdam**
**75378 Paris Cedex 8 (FR)**

(56) Documents cités:
**EP-A2- 1 083 423          US-A- 4 781 460**
**US-A1- 2008 221 711          US-A1- 2013 205 890**

• **ANTON KRUGER ET AL: "Two-Dimensional Video Disdrometer: A Description", JOURNAL OF ATMOSPHERIC AND OCEANIC TECHNOLOGY, vol. 19, no. 5, 1 mai 2002 (2002-05-01), pages 602-617, XP055264367, US ISSN: 0739-0572, DOI: 10.1175/1520-0426(2002)019<0602:TDVDAD>2.0 .CO;2**

EP 3 246 692 B1

**Description**

Arrière-plan de l'invention

L'invention se rapporte au domaine général de l'hydro-météorologie. Elle concerne plus précisément un dispositif de mesure de la granulométrie des gouttes de pluies (i.e. de la distribution du diamètre des gouttes).

La mesure du diamètre des gouttes de pluie est le plus souvent effectuée par des disdromètres optiques dans le but d'évaluer des taux de précipitation, lesquels sont ensuite utilisés par exemple pour l'étalonnage des radars hydro-météorologiques ou pour la modélisation hydrologique.

De façon connue, il existe par exemple des disdromètres optiques composés d'une source laser et de deux récepteurs optiques permettant de mesurer le diamètre équivalent d'une goutte d'eau, le diamètre équivalent d'une goutte d'eau étant défini comme le diamètre qu'aurait une goutte sphérique de même volume. De même, le diamètre équivalent d'un ellipsoïde est défini comme le diamètre qu'aurait une sphère de même volume.

Cette mesure repose sur l'analyse de l'intensité lumineuse des signaux réfractés reçus par les récepteurs optiques lors du passage d'une goutte d'eau au travers du (ou des) rayon(s) laser généré(s) par la source laser.

Un tel disdromètre est par exemple commercialisé par la société Campbell Scientific sous la référence commerciale PWS100.

US 2013/205890 A1 divulgue un procédé de mesure du diamètre d'une goutte d'eau, ledit procédé comprenant :

- une étape d'obtention d'un premier signal d'intensité lumineuse selon un angle déterminé dans un plan horizontal défini par l'axe d'une source laser et une étape d'obtention d'un deuxième signal d'intensité lumineuse selon un angle déterminé dans un plan vertical défini par ledit axe de ladite source laser, lesdits intensités lumineuses étant modulées par le passage de ladite goutte d'eau au travers d'au moins deux faisceaux laser émis par ladite source laser de sorte que lesdits au moins deux faisceaux soient horizontaux, parallèles et verticalement espacés d'une distance prédéterminée, lesdits signaux d'intensité étant acquis par des récepteurs optiques;
- une étape de mesure d'un premier décalage temporel entre les deux plus grands maxima d'intensité d'un desdits signaux d'intensité. US 4 781 460 et US 2008/221711 A1 se réfèrent à un appareil et un procédé pour mesurer la distribution de taille des particules dispersées dans un échantillon fluidique. ANTON KRUGER ET AL: "Two-Dimensional Video Disdrometer: A Description", JOURNAL OF ATMOSPHERIC AND OCEANIC TECHNOLOGY, vol. 19, no. 5, 1 mai 2002 (2002-05-01), pages 602-617, divulgue un disdromètre bi-dimensionel pour la mesure in situ de la distribution de taille des gouttes des précipitations. EP 1 083 423 A2 se réfère à un disdromètre pluviométrique.

Toutefois, les inventeurs ont mis en évidence que les disdromètres optiques reposant sur ce principe ont un biais croissant avec la taille des gouttes d'eau et sensible à partir de l'ordre du millimètre, faussant ainsi les mesures ultérieures des taux de précipitation.

Il existe donc un besoin d'une solution simple et efficace permettant de corriger ce biais et d'améliorer ainsi la précision des mesures du diamètre équivalent des gouttes d'eau réalisées par ces disdromètres.

Objet et résumé de l'invention

La présente invention répond notamment à ce besoin en proposant un procédé de mesure du diamètre équivalent d'une goutte d'eau. Ce procédé comprend :

- une étape d'obtention d'un premier signal d'intensité lumineuse selon un angle déterminé dans un plan horizontal défini par l'axe d'une source laser et une étape d'obtention d'un deuxième signal d'intensité lumineuse selon le même angle déterminé dans un plan vertical défini par ledit axe de ladite source laser les intensités lumineuses étant modulées par le passage de la goutte d'eau au travers d'au moins deux faisceaux laser émis par ladite source laser de sorte que les faisceaux laser soient horizontaux, parallèles et verticalement espacés d'une distance prédéterminée, les signaux d'intensité étant acquis par des récepteurs optiques positionnés de sorte que les angles formés par l'axe desdits récepteurs optiques et l'axe de ladite source laser soient égaux audit angle déterminé ;

- une étape de mesure d'un premier décalage temporel entre les deux plus grands maxima d'intensité d'un des signaux d'intensité ;

- une étape de mesure d'un deuxième décalage temporel entre le premier et le deuxième signal d'intensité ;

- une étape de calcul du diamètre équivalent de la goutte d'eau à partir d'un modèle ellipsoïdal de la goutte d'eau sous la forme d'un ellipsoïde dont le grand axe est parallèle au plan horizontal d'émission desdits au moins deux faisceaux laser, d'une loi reliant le rapport des deux axes du modèle ellipsoïdal au diamètre équivalent dudit modèle ellipsoïdal, ladite loi n'associant pas une constante audit rapport quel que soit ledit diamètre équivalent dudit modèle ellipsoïdal, dudit premier et dudit deuxième décalage temporel. Corrélativement, l'invention vise aussi un dispositif de mesure du diamètre équivalent d'une goutte d'eau. Ce dispositif comprend :

- un module d'obtention d'un premier signal d'intensité lumineuse selon un angle déterminé dans un plan horizontal défini par l'axe d'une source laser et un module d'obtention d'un deuxième signal d'intensité lumineuse selon le même angle déterminé dans un plan vertical défini par ledit axe de ladite source laser, les intensités lumineuses étant modulées par le passage de la goutte d'eau au travers d'au moins deux faisceaux laser émis par ladite source laser de sorte que les faisceaux laser soient horizontaux, parallèles et verticalement espacés d'une distance prédéterminée, les signaux d'intensité étant acquis par des récepteurs optiques positionnés de sorte que les angles formés par l'axe desdits récepteurs optiques et l'axe de ladite source laser soient égaux audit angle déterminé ;

- un module de mesure d'un premier décalage temporel entre les deux plus grands maxima d'intensité d'un des signaux d'intensité ;

- un module de mesure d'un deuxième décalage temporel entre ledit premier et le deuxième signal d'intensité ;

- un module de calcul du diamètre équivalent de la goutte d'eau à partir d'un modèle ellipsoïdal de la goutte d'eau sous la forme d'un ellipsoïde dont le grand axe est parallèle au plan horizontal d'émission desdits au moins deux faisceaux laser, d'une loi reliant le rapport des deux axes du modèle ellipsoïdal au diamètre équivalent du modèle ellipsoïdal, ladite loi n'associant pas une constante audit rapport quel que soit ledit diamètre équivalent dudit modèle ellipsoïdal dudit premier et dudit deuxième décalage temporel.

Dans l'état de la technique, les particules d'eau liquide sont considérées comme sphériques. Or, ces gouttes d'eau ont plutôt la forme d'un haricot bombé en raison des forces de frottement exercées par l'air qui repoussent la goutte vers le haut et en déforment la base.

L'invention propose ainsi de mieux prendre en compte la géométrie des gouttes d'eau en représentant celles-ci sous forme d'ellipsoïde plutôt que sous forme de sphère.

Les inventeurs ont avantageusement utilisé une relation empirique reliant le quotient des deux axes principaux de l'ellipsoïde au diamètre équivalent afin de réduire le nombre de variables de la modélisation ellipsoïdale.

Dans une première variante de réalisation de l'invention, l'étape de calcul comprend l'évaluation en un point d'une fonction reliant le diamètre équivalent à un décalage vertical, ce décalage vertical étant défini comme la distance entre le grand axe horizontale du modèle ellipsoïdal de la goutte d'eau et le plan horizontal d'émission des faisceaux laser pour laquelle les faisceaux laser sont réfractés selon l'angle déterminé dans le plan vertical.

Dans un mode particulier de réalisation de la première variante de l'invention, la fonction est un polynôme obtenu par approximation polynomiale de la courbe théorique reliant le diamètre équivalent au décalage vertical.

Dans un mode particulier de réalisation de la première variante de l'invention, le point est égal à $d * \frac{\Delta_2}{\Delta_1}$ et où :

$d$ est la distance prédéterminée entre les faisceaux laser ;
$\Delta_1$ est le premier décalage temporel ; et
$\Delta_2$ est le deuxième décalage temporel.

Dans une deuxième variante de réalisation de l'invention, l'étape de calcul comprend :

- une étape de calcul du diamètre de la goutte d'eau à partir d'un modèle sphérique de cette goutte d'eau, du premier et du deuxième décalage temporel ;
- une étape de calcul du diamètre équivalent de ladite goutte par correction polynomiale dudit diamètre sphérique.

Cette solution est particulièrement simple et efficace. Elle permet d'améliorer la précision des procédés de calcul d'un diamètre équivalent d'une goutte d'eau utilisant une modélisation sphérique de la goutte en ajoutant une simple étape de correction de ce diamètre équivalent par application d'une relation polynomiale.

Dans un mode particulier de réalisation, les différentes étapes du procédé de mesure du diamètre équivalent d'une goutte d'eau sont déterminées par des instructions de programmes d'ordinateurs.

En conséquence, l'invention vise aussi un programme d'ordinateur sur un support d'informations, ce programme étant susceptible d'être mis en œuvre dans un disdromètre ou plus généralement dans un ordinateur, ce programme comportant des instructions adaptées à la mise en œuvre des étapes d'un procédé de mesure du diamètre équivalent d'une goutte d'eau tel que décrit ci-dessus.

Ce programme peut utiliser n'importe quel langage de programmation, et être sous la forme de codes source, codes objet, ou de codes intermédiaires entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Brève description des dessins

Des caractéristiques et avantages particuliers de la présente invention ressortiront de la description détaillée faite aux figures dans lesquelles :

- la figure 1 représente une vue schématique en coupe verticale d'un disdromètre conforme à un premier mode de réalisation de l'invention ;
- la figure 2 représente en vue de dessus la position relative d'une source laser et des récepteurs optiques appartenant à un disdromètre selon un premier mode de réalisation de l'invention.
- la figure 3 illustre un exemple d'architecture matérielle d'un dispositif de mesure du diamètre équivalent d'une goutte d'eau selon un premier mode de réalisation de l'invention ;
- la figure 4 représente, sous forme d'ordinogramme, les principales étapes d'un procédé de mesure du diamètre équivalent d'une goutte d'eau conforme à l'invention dans une premier mode de réalisation ;
- la figure 5 illustre la réfraction d'un faisceau laser au passage d'une goutte d'eau modélisée sous la forme d'un ellipsoïde de petit axe B et de grand axe A ;
- la figure 6 illustre la relation $\alpha = f(D_{eq}, h)$ existant entre l'angle $\alpha$ et le décalage $h$ pour un diamètre équivalent $D_{eq}$ de 3.5 mm dans le cas d'un modèle ellipsoïdal de goutte d'eau;
- la figure 7 illustre, dans le cas d'un modèle ellipsoïdal, la courbe théorique (trait continu) reliant le diamètre équivalent $D_{eq}$ au décalage $h_\theta$ ainsi qu'une approximation linéaire (trait pointillé) de cette courbe théorique ;
- la figure 8 représente, sous forme schématique, les relations temporelles existants entre les signaux $SIG_1$ et $SIG_2$ reçus par les récepteurs optiques d'un disdromètre ainsi que la corrélation croisée entre ces deux signaux selon un premier mode de réalisation de l'invention :
- la figure 9 représente une vue schématique en coupe verticale d'un disdromètre conforme à un deuxième mode de réalisation de l'invention ;
- la figure 10 illustre un exemple d'architecture matérielle d'un dispositif de mesure du diamètre équivalent d'une goutte d'eau selon un deuxième mode de réalisation de l'invention ;
- la figure il représente, sous forme d'ordinogramme, les principales étapes d'un procédé de mesure du diamètre équivalent d'une goutte d'eau conforme à l'invention dans un deuxième mode de réalisation ;
- la figure 12 représente, sous forme schématique, les relations temporelles existants entre les signaux $SIG_1$' et $SIG_2$' reçus par les récepteurs optiques d'un disdromètre ainsi que la corrélation croisée entre ces deux signaux selon un deuxième mode de réalisation de l'invention ;
- la figure 13 illustre la réfraction d'un faisceau laser au passage d'une goutte d'eau modélisée sous la forme d'une sphère de diamètre D ;
- la figure 14 illustre la relation reliant $D_{eq}$ à $D_{sph}$.

Description détaillée de l'invention

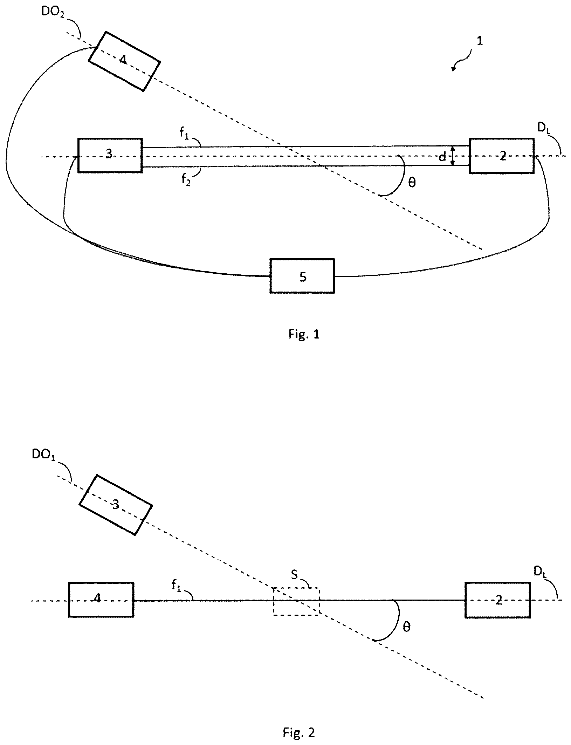

La **figure 1** représente une vue schématique en coupe verticale d'un disdromètre 1 conforme à l'invention dans un premier mode de réalisation.

Le disdromètre 1 comprend :

- une source laser 2 apte à émettre deux faisceaux laser $f_1$ et $f_2$ horizontaux, parallèles et espacés verticalement d'une distance prédéterminée d ;
- un récepteur optique 3 positionné dans le plan horizontal défini par l'axe $D_L$ de la source laser 2, le récepteur optique 3 étant en outre positionné du côté d'émission de la source laser 2 de sorte que l'axe $DO_1$ du récepteur optique 3 fasse un angle $\theta$ déterminé avec l'axe $D_L$ de la source laser 2 ;
- un récepteur optique 4 positionné du côté d'émission de la source laser 2 dans le plan vertical, i.e. orthogonal au plan horizontal et contenant l'axe $D_L$, de sorte que l'angle formé par l'axe $DO_2$ du récepteur optique 4 et l'axe $D_L$ soit égal à l'angle déterminé $\theta$ ;
- un dispositif 5 de mesuré du diamètre équivalent $D_{eq}$ d'une goutte d'eau conforme à l'invention.

La figure 2 représente en vue de dessus la position relative de la source 2 et des récepteurs optiques 3 et 4.

L'angle déterminé $\theta$ est choisi non nul et inférieur ou égal à 45° de façon à ce que les phénomènes de réflexion et de diffraction soient négligeables par rapport au phénomène de réfraction. Dans l'exemple décrit ici, l'angle déterminé $\theta$ a pour valeur 20°.

La distance prédéterminée est choisie non nulle et inférieure à 5 mm. De façon préférentielle, cette distance d est prise dans l'intervalle allant de 0.4 mm à 1.2 mm. Dans l'exemple décrit ici, la distance prédéterminée a pour valeur 0.8 mm.

Il est à noter par ailleurs :

- que l'intersection des axes optiques $DO_1$, $DO_2$ et $D_L$ se trouvent dans la zone de mesure S,
- que la disposition relative du récepteur optique 3 et de la source laser 2 permet au récepteur optique 3 de recevoir la lumière réfractée dans le plan horizontal et dans la direction déterminée par l'angle $\theta$ lorsqu'une goutte d'eau traverse la surface de mesure S, et
- que la position relative du récepteur optique 4 et de la source laser 2 permet au récepteur optique 4 de recevoir la lumière réfractée dans le plan vertical et dans la direction déterminée par l'angle $\theta$ lorsqu'une goutte d'eau traverse la surface de mesure S.

Dans l'exemple décrit ici, les récepteurs optiques 3 et 4 sont des photodiodes.

Conformément à l'invention, les signaux d'intensité lumineuse acquis par les récepteurs 3 et 4 sont traités par le dispositif 5 compris dans le disdromètre 1.

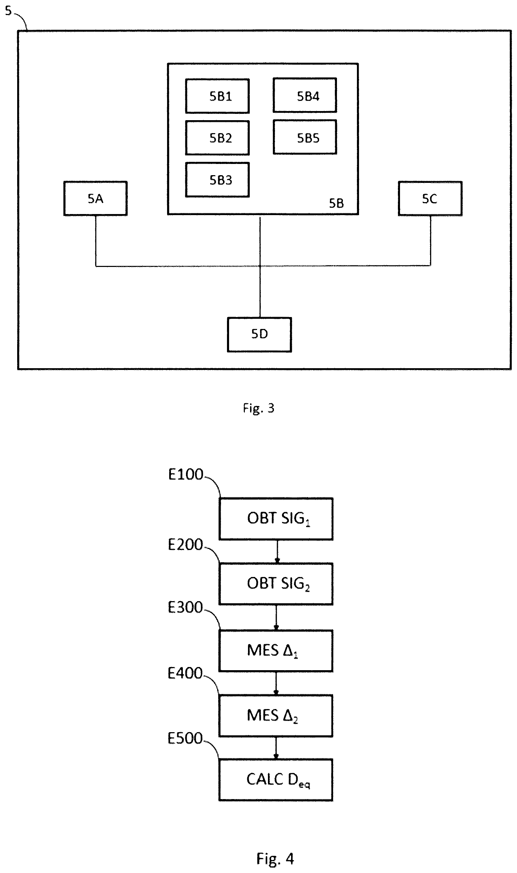

Dans le mode de réalisation décrit ici, le dispositif 5 de mesure du diamètre équivalent d'une goutte d'eau dispose de l'architecture matérielle d'un ordinateur, telle qu'illustrée schématiquement à la figure 3.

Ainsi, le dispositif 5 comporte notamment un processeur 5A, une mémoire morte 5B, une mémoire, vive 5C, une mémoire non volatile 5D. Le processeur 5A, les mémoires 5B-5D peuvent éventuellement être partagés avec des moyens correspondants du disdromètre 1.

La mémoire morte 5B du dispositif 5 constitue un support d'enregistrement lisible par le processeur 5A et sur lequel est enregistré un programme d'ordinateur conforme à l'invention, comportant des instructions pour l'exécution des étapes d'un procédé de mesure du diamètre équivalent d'une goutte d'eau conforme à l'invention, les étapes de ce procédé de mesure étant décrites ultérieurement.

Ce programme d'ordinateur définit de façon équivalente des modules fonctionnels du dispositif 5, tels que notamment un modulé 5B1 d'obtention d'un premier signal d'intensité lumineuse selon l'angle déterminé $\theta$ dans le plan horizontal, un module 5B2 d'obtention d'un deuxième signal d'intensité lumineuse selon l'angle déterminé $\theta$ dans le plan vertical, un module 5B3 de mesure d'un premier décalage temporel entre les deux plus grands maxima d'intensité d'un des deux signaux d'intensité, un module 5B4 de mesure d'un deuxième décalage temporel entré le premier et le deuxième signal d'intensité et un module 5B5 de calcul du diamètre équivalent de la goutte d'eau. Leurs fonctions sont décrites plus en détail en référence aux étapes du procédé de mesure du diamètre équivalent illustrées à la **figure 4** dans un mode particulier de réalisation de l'invention.

Nous allons maintenant décrire un premier mode de réalisation de l'invention.

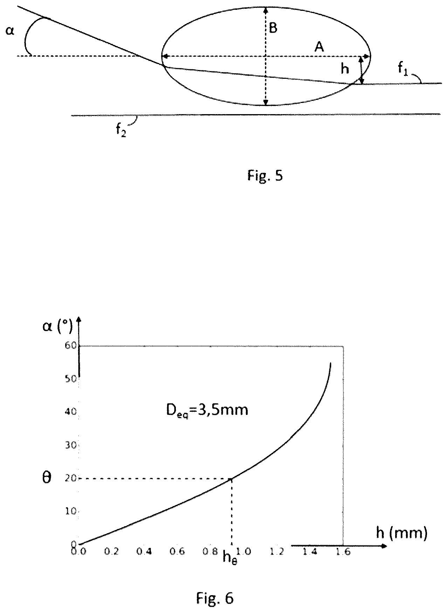

La **figure 5** représente une modélisation ellipsoïdale d'une goutte d'eau représentée sous la forme d'un ellipsoïde de petit axe B et dont le grand axe A est parallèle au plan horizontal d'émission des faisceaux laser par la source 2.

Le diamètre équivalent d'une goutte d'eau ellipsoïdale vérifie par définition les équations $A = \frac{1}{2} D_{eq} a^{-\frac{1}{3}}$ et $B = \frac{1}{2} D_{eq} a^{\frac{2}{3}}$ avec $a = \frac{B}{A}$.

Le paramètre a peut-être par ailleurs relié au diamètre équivalent $D_{eq}$ par des relations empiriques.

Dans l'exemple décrit ici, le paramètre a et le diamètre équivalent $D_{eq}$ vérifie la relation empirique suivante :

$$a = \begin{cases} 1 & D_{eq} < 1\,mm \\ 1.075 - 0.075D_{eq} & 1\,mm \leq D_{eq} \leq 5\,mm \\ 0.7 & 5\,mm < D_{eq} \end{cases}$$

Cette relation est décrite dans le document Battaglia et al, « PARSIVEL Snow Observations : A Critical Assessment », Journal of Atmospheric and Oceanic Technology, 2010, 27(2), 333-344.

En variante, le paramètre a et le diamètre équivalent $D_{eq}$ peuvent vérifier la relation empirique $a = 1.012 - 0.01445D_{eq} - 0.01028D_{eq}^2$ (décrite dans Andsager et al, « Laboratory Measurements of Axis Ratios for Large Raindrops », Journal of the Atmospheric Sciences, 1999. 56(15): p. 2673-2683) ou tout autre relation empirique pertinente.

L'utilisation d'une relation empirique entre a et $D_{eq}$ permet de définir complètement les paramètres A et B du modèle ellipsoïdal pour un diamètre équivalent $D_{eq}$ donné.

Lorsque le grand axe A de la goutte d'eau est décalé verticalement d'une distance h par rapport au plan horizontal d'émission d'un faisceau laser, le rayon réfracté fait un angle $\alpha$ avec ce plan horizontal.

La relation théorique entre l'angle a et le décalage h peut être obtenue par l'utilisation des relations de réfraction de Snell-Descartes d'optique géométrique (lors de l'entrée du faisceau laser dans la goutte et de sa sortie) pour toutes les modélisations ellipsoïdales envisageables (i.e. pour toutes les valeurs envisageables de $D_{eq}$). Ces relations, connues de l'homme de métier, permettent de décrire le changement de direction d'un rayon lumineux à l'interface entre deux milieux d'indice de réfraction différent. Dans ce document, les résultats numériques ont été obtenus avec un indice de réfraction de 1 pour l'air de l'atmosphère et de 1.33 pour l'eau de la goutte.

La **figure 6** présente ainsi la courbe $\alpha = f(D_{eq}, h)$ reliant $\alpha$ à h pour une valeur donnée du diamètre équivalent $D_{eq} = 3,5\,mm$.

Sur la base de cette courbe, la valeur $h_\theta$ de h correspondant à l'angle prédéterminé $\theta$ est calculée pour la valeur particulière de $D_{eq} = 3,5$ mm.

En réitérant les étapes précédentes pour différente valeur de $D_{eq}$ on obtient une courbe théorique reliant $D_{eq}$ à $h_\theta$.

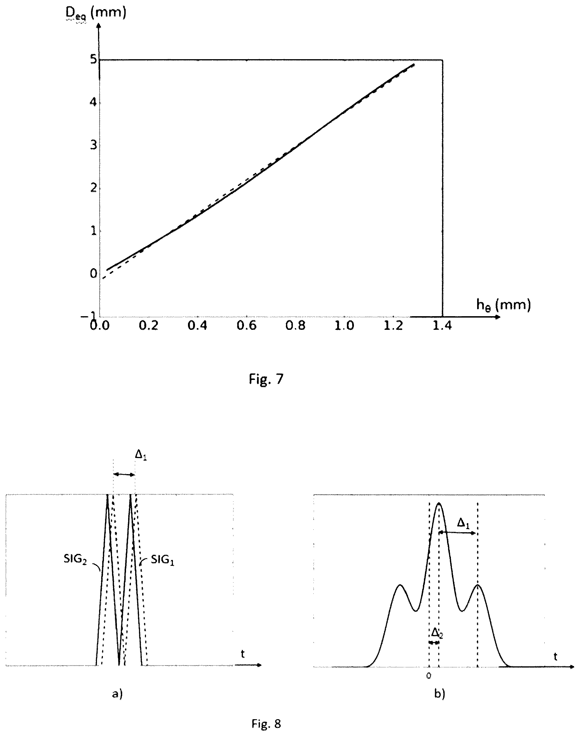

Cette courbe théorique représentée à la **figure 7** peut être approximée au moyen d'une interpolation polynomiale par exemple par la méthode des moindres carrés connue de l'homme du métier. A titre d'exemple, en utilisant un pas de 0,2 mm pour la variable $h_\theta$ et pour un diamètre équivalent allant de 0,1 mm à 5 mm, les polynômes suivants ont été obtenus :

$$D_{eq} = 3.912h_\theta - 0.144$$

$$D_{eq} = 0.375h_\theta^2 + 3.416h_\theta - 0.032$$

Cette interpolation polynomiale permet ainsi de calculer le diamètre équivalent de la goutte d'eau $D_{eq}$ à partir de la mesure expérimentale du décalage $h_\theta$.

Nous allons maintenant décrire, en référence à la figure 4, les principales étapes d'un procédé de mesure du diamètre équivalent d'une goutte d'eau selon l'invention dans le premier mode de réalisation mis en oeuvre par le dispositif 5.

Lors d'une étape E100, le dispositif de mesure 5 obtient, à l'aide, du récepteur optique 3 du disdromètre 1, un signal $SIG_1$ représentant l'intensité lumineuse reçue au cours du temps par le récepteur optique 3.

De même, lors d'une étape E200, le dispositif de mesure 5 obtient, à l'aide du récepteur optique 4 du disdromètre 1, un signal $SIG_2$ représentant l'intensité lumineuse reçue au cours du temps par le récepteur optique 4.

A titre d'exemple, **la figure 8a)** présente un exemple schématique (sous forme de triangles) de signaux $SIG_1$ et $SIG_2$ obtenus par le dispositif de mesure 5 et acquis par les récepteurs optiques 3 et 4

Lorsqu'une goutte d'eau traverse la surface de mesure S, une partie des deux faisceaux laser est réfractée par la goutte d'eau. Les récepteurs optiques 3 et 4 mesurent et transforment en signaux d'intensité lumineuse $SIG_1$ et $SIG_2$ la part des faisceaux laser réfractés dans les plans horizontaux et verticaux selon l'angle prédéterminé $\theta$.

La relation théorique entre l'angle $\alpha$ et le décalage $h$ obtenue par l'utilisation des relations de réfraction de Snell-Descartes d'optique géométrique (lors de l'entrée du faisceau laser dans la goutte et de sa sortie) montre qu'un pic sur le signal reçu est obtenu pour $h=0$ par rapport à un faisceau lumineux dans le plan horizontal et pour une valeur non nulle $h_\theta$ dans le plan vertical, celle donnée par la relation $\alpha = \theta$.

En conséquence, le récepteur optique 4 situé dans le plan vertical reçoit les faisceaux réfractés par la goutte d'eau avant le récepteur optique 3 situé dans le plan horizontal. Pour cette raison, les signaux $SIG_1$ et $SIG_2$ sont décalés temporellement et ce décalage temporel est noté $\Delta_2$.

Lorsque la goutte d'eau traverse successivement les faisceaux laser horizontaux $f_1$ et $f_2$ émis par la source 2 et espacés verticalement de la distance prédéterminée d, les récepteurs optiques 3 et 4 reçoivent successivement les faisceaux réfractés correspondant à chacun de ces faisceaux laser.

Ainsi, les signaux $SIG_1$ et $SIG_2$ présentent deux pics consécutifs correspondant chacun à la réfraction d'un des faisceaux laser émis par la source 2.

L'écart temporel $\Delta_1$ entre ces pics, identique pour les deux signaux $SIG_1$ et $SIG_2$, est mesuré au cours d'une étape E300 par le dispositif 5. Cet écart temporel $\Delta_1$ permet de calculer la vitesse de chute v de la goutte d'eau qui s'exprime sous la forme $v = \frac{d}{\Delta_1}$.

Puis au cours d'une étape E400, le dispositif 5 mesure le décalage temporel $\Delta_2$ entre le signal $SIG_1$ et le signal $SIG_2$.

Comme illustré à la **figure 8b),** les décalages temporels $\Delta_1$ et $\Delta_2$ peuvent être mesurés à partir de l'évaluation de la corrélation croisée entre les deux signaux $SIG_1$ et $SIG_2$ par des méthodes connues de l'homme du métier. Cette méthode consiste à décaler d'un certain pas de temps un signal par rapport à l'autre, puis à calculer la corrélation entre ces signaux décalés. Cette opération étant répétée pour différents pas de temps. Lé pic principal dans la corrélation croisée est obtenu pour un décalage $\Delta_2$ entre les signaux qui assure une superposition des deux pics de $SIG_1$ et $SIG_2$. Les deux pics secondaires dans la corrélation croisée sont obtenus pour des décalages assurant la superposition d'un seul pic de $SIG_1$ et $SIG_2$.

Il est à noter que ce décalage temporel $\Delta_2$ est relié à la distance $h_\theta$ par la relation $\Delta_2 = \frac{h_\theta}{v}$.

Lors de l'étape E500, le dispositif 5 calcule le diamètre équivalent $D_{eq}$ de la sphère.

Ce calcul s'effectue en calculant tout d'abord la valeur de la distance $h_\theta$ en utilisant la relation $h_\theta = \frac{d\Delta_2}{\Delta_1}$ puis le diamètre équivalent $D_{eq}$ en utilisant l'interpolation polynomiale de la courbe théorique reliant $D_{eq}$ à $h_\theta$.

Dans l'exemple présenté ici, cette relation polynomiale est la suivante :

$$D_{eq} = 3.912 h_\theta - 0.144$$

En variante, le calcul du diamètre équivalent s'effectue en une seule étape, sans passer par le calcul intermédiaire de $h_\theta$. Dans l'exemple présenté ici, la relation donnant le diamètre équivalent est alors la suivante :

$$D_{eq} = 3.912 \frac{d\Delta_2}{\Delta_1} - 0.144$$

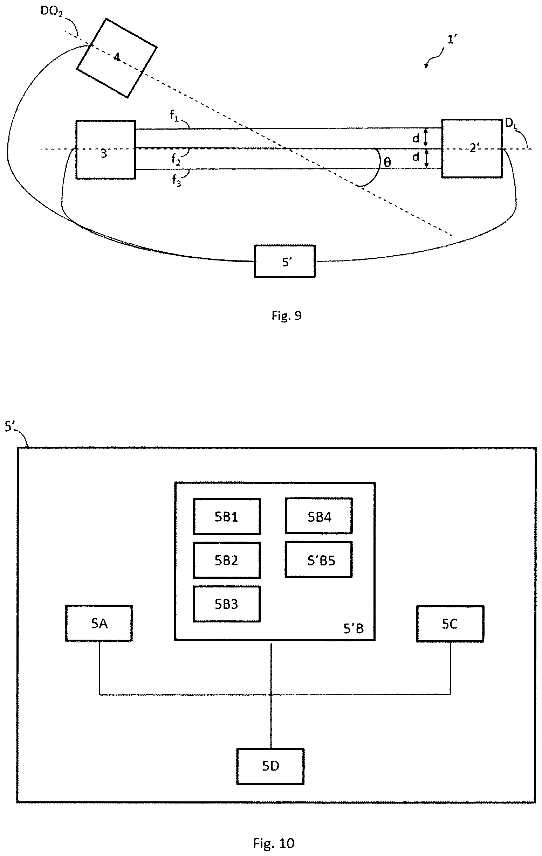

Nous allons maintenant décrire un deuxième mode de réalisation de l'invention mis en oeuvre par un disdromètre 1' illustré à la **figure 9** en coupe verticale. Par soucis de simplification, des références identiques sont données sur cette figure aux éléments communs avec le premier mode de réalisation illustré à la figure 1.

Le disdromètre 1' comprend :

- une source laser 2' apte à émettre trois faisceaux laser $f_1$, $f_2$ et $f_3$ horizontaux, parallèles et espacés verticalement d'une distance prédéterminée d ;
- un récepteur optique 3 positionné dans le plan horizontal défini par l'axe $D_L$ de la source laser 2', le récepteur optique 3 étant en outre positionné du côté d'émission de la source laser 2' de sorte que l'axe $DO_1$ du récepteur optique 3 fasse un angle $\theta$ déterminé avec l'axe $D_L$ de la source laser 2' ;
- un récepteur optique 4 positionné du côté d'émission de la source laser 2' dans le plan vertical, i.e. orthogonal au plan horizontal et contenant l'axe $D_L$, de sorte que l'angle formé par l'axe $DO_2$ du récepteur optique 4 et l'axe $D_L$ soit égal à l'angle déterminé $\theta$ ;
- un dispositif 5' de mesure du diamètre équivalent $D_{eq}$ d'une goutte d'eau conforme à l'invention.

Pour les mêmes raisons que celles exposées dans le premier mode de réalisation :

- l'angle déterminé $\theta$ est choisi non nul et inférieur ou égal à 45°. Dans l'exemple décrit ici, l'angle déterminé $\theta$ a pour valeur 20°, et
- la distance prédéterminée est choisie non nulle et inférieure à 5 mm. De façon préférentielle, cette distance d est prise dans l'intervalle allant de 0.4 mm à 1.2 mm. Dans l'exemple décrit ici, la distance prédéterminée a pour valeur 0.8 mm.

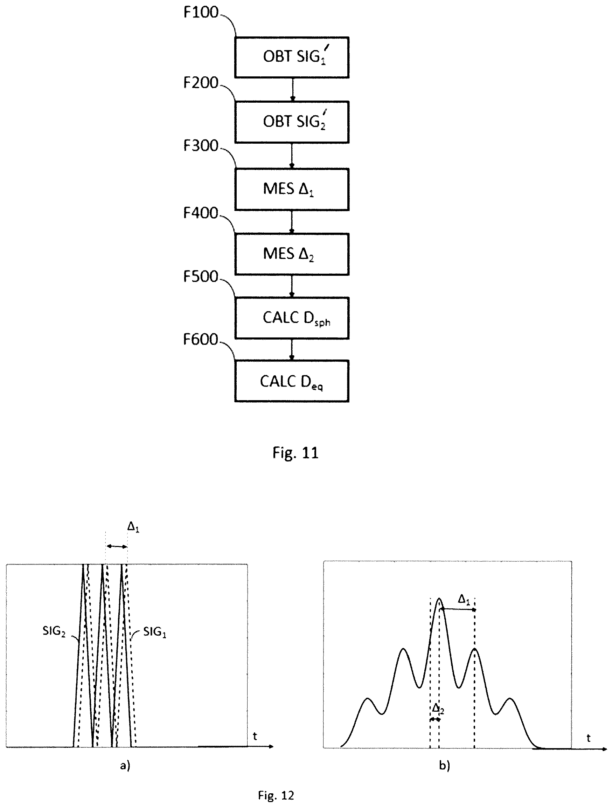

Dans le mode de réalisation décrit ici, le dispositif 5' de mesure du diamètre équivalent d'une goutte d'eau dispose de l'architecture matérielle d'un ordinateur, telle qu'illustrée schématiquement à la **figure 10**. Le dispositif 5' ne diffère du dispositif 5 décrit à la figure 3 que par son module 5'B5 de calcul du diamètre équivalent de la goutte d'eau dont la fonction est décrite plus en détail en référence aux étapes du procédé de mesure du diamètre équivalent illustrées à la **figure 11** dans ce deuxième mode particulier de réalisation de l'invention.

Nous allons maintenant décrire, en référence à la figure 11, les principales étapes d'un procédé de mesure du diamètre équivalent d'une goutte d'eau selon l'invention dans le deuxième mode de réalisation mis en œuvre par le dispositif 5'.

Lors d'une étape F100, le dispositif de mesure 5 obtient, à l'aide du récepteur optique 3 du disdromètre 1', un signal $SIG_1$' représentant l'intensité lumineuse reçue au cours du temps par le récepteur optique 3.

De même, lors d'une étape F200, le dispositif de mesure 5' obtient, à l'aide du récepteur optique 4 du disdromètre 1', un signal $SIG_2$' représentant l'intensité lumineuse reçue au cours du temps par le récepteur optique 4.

A titre d'exemple, **la figure 12 a)** présente un exemple illustratif théorique de signaux $SIG_1$' et $SIG_2$' obtenus par le dispositif de mesure 5' et acquis par les récepteurs optiques 3 et 4

Lorsqu'une goutte d'eau traverse la surface de mesure S, une partie des trois faisceaux laser est réfractée par la goutte d'eau. Les récepteurs optiques 3 et 4 mesurent et transforment en signaux d'intensité lumineuse $SIG_1$' et $SIG_2$' la part des faisceaux laser réfractés dans les plans horizontaux et verticaux selon l'angle prédéterminé $\theta$.

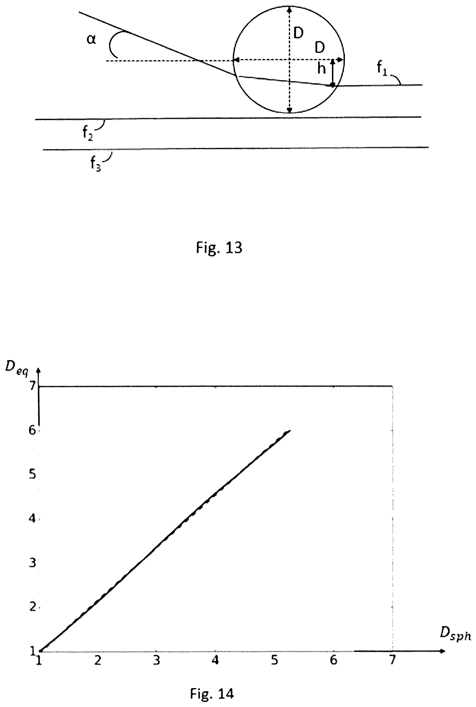

La **figure 13** représente une modélisation d'une goutte d'eau sous la forme d'une sphère de diamètre $D_{sph}$.

Lorsque le diamètre de la goutte d'eau est décalé verticalement d'une distance h par rapport au plan horizontal d'émission d'un faisceau laser, le rayon réfracté fait un angle $\alpha$ avec ce plan horizontal.

La relation théorique entre l'angle $\alpha$ et le décalage h peut être obtenue par l'utilisation des relations de réfraction de Snell-Descartes d'optique géométrique (lors de l'entrée du faisceau laser dans la goutte et de sa sortie).

$$h = \frac{D_{sph} n \sin(\alpha/2)}{2\sqrt{(1+n^2-2n\cos(\alpha/2))}}$$

Cette relation théorique s'exprime sous la forme analytique où n est l'indice de réfraction de l'eau de la goutte (typiquement n=1.33).

Cette relation théorique entre l'angle $\alpha$ et le décalage h montre que le pic des signaux reçus est obtenu pour h=0 dans le plan horizontal et pour une valeur non nulle $h_\theta$ dans le plan vertical, celle donnée par la relation $\alpha = \theta$.

En conséquent, le récepteur optique 4 situé dans le plan vertical reçoit les faisceaux réfractés par la goutte d'eau avant le récepteur optique 3 situé dans le plan horizontal. Pour cette raison, les signaux $SIG_1$' et $SIG_2$' sont décalés temporellement et ce décalage temporel est noté $\Delta_2$.

Lorsque la goutte d'eau traverse successivement les faisceaux laser horizontaux $f_1$, $f_2$ et $f_3$ émis par la source 2' et espacés verticalement de la distance prédéterminée d, les récepteurs optiques 3 et 4 reçoivent successivement les faisceaux réfractés correspondant à chacun de ces faisceaux laser.

Ainsi, les signaux $SIG_1$' et $SIG_2$' présentent trois pics consécutifs correspondant chacun à la réfraction d'un des faisceaux laser émis par la source 2'.

L'écart temporel $\Delta_1$ entre ces pics, identique pour les deux signaux $SIG_1$' et $SIG_2$', est mesuré au cours d'une étape F300 par le dispositif 5'. Cet écart temporel $\Delta_1$ permet de calculer la vitesse de chute v de la goutte d'eau qui s'exprime sous la forme $v = \frac{d}{\Delta_1}$.

Puis au cours d'une étape F400, le dispositif 5' mesure le décalage temporel $\Delta_2$ entre le signal $SIG_1$' et le signal $SIG_2$'.

Comme illustré à la **figure 12 b)**, les décalages temporels $\Delta_1$ et $\Delta_2$ peuvent être mesurés à partir de l'évaluation de la corrélation croisée entre les deux signaux $SIG_1$' et $SIG_2$' par des méthodes connues de l'homme du métier. Cette méthode consiste à décaler d'un certain pas de temps un signal par rapport à l'autre, puis à calculer la corrélation entre ces signaux décalés. Cette opération étant répétée pour différents pas de temps. Le pic principal dans la corrélation croisée est obtenu pour un décalage $\Delta_2$ entre les signaux qui assure une superposition des trois pics de $SIG_1$' et $SIG_2$'. Les deux premiers pics secondaires dans la corrélation croisée sont obtenus pour des décalages assurant la superposition de deux pics de $SIG_1$' et $SIG_2$'. Les plus petits pics dans la corrélation croisée sont obtenus pour des décalages temporels assurant une superposition d'un des pics de $SIG_1$' et $SIG_2$'.

Il est à noter que ce décalage temporel $\Delta_2$ est relié à la distance $h_\theta$ par la relation $\Delta_2 = \frac{h_\theta}{v}$.

Lors de l'étape F500, le dispositif 5' calcule le diamètre sphérique $D_{sph}$ de la goutte d'eau en utilisant la relation :

$$D_{sph} = 2h_\theta \frac{\sqrt{(1 + n^2 - 2n\cos(\theta/2))}}{n\sin(\theta/2)} = 2d\frac{\Delta 2}{\Delta 1}\frac{\sqrt{(1 + n^2 - 2n\cos(\theta/2))}}{n\sin(\theta/2)}$$

Lors de l'étape F600, le dispositif 5' calcule le diamètre équivalent $D_{eq}$ de la goutte d'eau représenté par un modèle ellipsoïdal en utilisant l'interpolation polynomiale de la courbe théorique reliant $D_{eq}$ à $D_{sph}$. Le calcul de cette interpolation polynomiale est présenté ci-dessous en relation avec la **figure 13.**

Dans l'exemple présenté ici, cette relation polynomiale est la suivante :

$$D_{eq} = 1.192D_{sph} - 0.226$$

Nous allons maintenant décrire la procédure permettant d'obtenir l'interpolation polynomiale de la courbe théorique reliant $D_{eq}$ à $D_{sph}$ utilisée à l'étape F600.

Pour chaque valeur de $D_{eq}$ correspondant à une modélisation particulière de la goutte d'eau sous la forme d'un modèle ellipsoïdal, il existe une courbe $\alpha = f(D_{eq}, h)$ (pour mémoire la figure 6 représente une telle courbe pour $D_{eq}$= 3.5 mm).

Pour toutes les valeurs envisageables de $D_{eq}$, les deux étapes suivantes sont effectuées :

- la valeur de $h_\theta$ correspondant à l'angle prédéterminé $\theta$ est calculés en utilisant la courbe $\alpha = f(D_{eq}, h)$ et la relation $\alpha = \theta$ ; et
- la valeur de $D_{sph}$ correspondant à la valeur de $h_\theta$ déterminée à l'étape précédente est calculée en utilisant la relation

$$D_{sph} = 2h_\theta \frac{\sqrt{(1 + n^2 - 2n\cos(\theta/2))}}{n\sin(\theta/2)}.$$

On obtient ainsi une courbe théorique reliant $D_{eq}$ à $D_{sph}$. En d'autres termes, on obtient une courbe théorique reliant le diamètre équivalent du modèle ellipsoïdal au diamètre du modèle sphérique. Cette courbe théorique qui peut être approximée au moyen d'une interpolation polynomiale par exemple par la méthode des moindres carrés connue de l'homme du métier.

La figure 14 présente la courbe théorique (en train plein) reliant $D_{eq}$ à $D_{sph}$ ainsi que son interpolation linéaire (en train pointillé).

A titre d'exemple, en utilisant un pas de 0,2 mm pour la variable h et pour un diamètre équivalent allant de 1 mm à 6 mm, les polynômes suivants ont été obtenus :

$$D_{eq} = 1.192D_{sph} - 0.226$$

$$D_{eq} = 0.00692D_{sph}^2 + 1.235D_{sph} - 0.283$$

$$D_{eq} = -0.0136\,D_{sph}^3 + 0.120\,D_{sph}^2 + 0.875D_{sph} + 0.00990$$

## Revendications

1. Procédé de mesure du diamètre équivalent ($D_{eq}$) d'une goutte d'eau, ledit procédé comprenant :

   - une étape (E100, F100) d'obtention d'un premier signal d'intensité lumineuse ($SIG_1$, $SIG_1$') selon un angle déterminé ($\theta$) dans un plan horizontal défini par l'axe ($D_L$) d'une source laser (2) et une étape (E200, F200) d'obtention d'un deuxième signal d'intensité lumineuse ($SIG_2$, $SIG_2$') selon ledit angle déterminé ($\theta$) dans un plan vertical défini par ledit axe de ladite source laser (2), lesdits intensités lumineuses étant modulées par le passage de ladite goutte d'eau au travers d'au moins deux faisceaux laser ($f_1$, $f_2$) émis par ladite source laser (2) de sorte que lesdits au moins deux faisceaux soient horizontaux, parallèles et verticalement espacés d'une distance prédéterminée (d), lesdits signaux d'intensité étant acquis par des récepteurs optiques (3, 4) positionnés de sorte que les angles formés par l'axe ($DO_1$, $DO_2$) desdits récepteurs optiques et l'axe de ladite source laser ($D_L$) soient égaux audit angle déterminé ($\theta$);
- une étape (E300, F300) de mesure d'un premier décalage temporel ($\Delta_1$) entre les deux plus grands maxima d'intensité d'un desdits signaux d'intensité ;
- une étape (E400, F400) de mesure d'un deuxième décalage temporel ($\Delta_2$) entre ledit premier (SIG1, SIG1') et ledit deuxième (SIG2, SIG2') signal d'intensité ;
- une étape (E500, F500-F600) de calcul du diamètre équivalent ($D^{eq}$) de ladite goutte d'eau à partir d'un modèle ellipsoïdal de ladite goutte d'eau sous la forme d'un ellipsoïde dont le grand axe (A) est parallèle au plan horizontal d'émission desdits au moins deux faisceaux laser, d'une loi reliant le rapport (a) des deux axes (A, B) dudit modèle ellipsoïdal au diamètre équivalent dudit modèle ellipsoïdal, ladite loi n'associant pas une constante audit rapport (a) quel que soit ledit diamètre équivalent dudit modèle ellipsoïdal, dudit premier ($\Delta_1$) et dudit deuxième ($\Delta_2$) décalage temporel.

2. Procédé selon la revendication 1 dans lequel ladite étape de calcul (E500) comprend l'évaluation en un point d'une fonction reliant le diamètre équivalent à un décalage vertical ($h^\theta$), ledit décalage vertical étant défini comme la distance entre le grand axe horizontale (A) dudit modèle ellipsoïdal de ladite goutte d'eau et le plan horizontal d'émission desdits faisceaux laser ($f_1$, $f_2$) pour laquelle lesdits faisceaux laser sont réfractés selon ledit angle déterminé ($\theta$) dans ledit plan vertical.

3. Procédé selon la revendication 2 dans lequel ladite fonction est un polynôme obtenu par approximation polynomiale de la courbe théorique reliant le diamètre équivalent audit décalage vertical ($h^\theta$).

4. Procédé selon l'une des revendications 2 à 3 dans lequel ledit point est égal à

$$d * \frac{\Delta_2}{\Delta_1}$$

et où :

$d$ est ladite distance prédéterminée entre lesdits au moins deux faisceaux laser ;
$\Delta_1$ est ledit premier décalage temporel ; et
$\Delta_2$ est ledit deuxième décalage temporel.

5. Procédé selon la revendication 1 dans lequel ladite étape de calcul (F500-F600) comprend :

- une étape (F500) de calcul du diamètre sphérique de ladite goutte d'eau à partir d'un modèle sphérique de ladite goutte d'eau, dudit premier et dudit deuxième décalage temporel ;
- une étape (F600) de calcul du diamètre équivalent de ladite goutte par correction polynomiale dudit diamètre sphérique.

6. Programme d'ordinateur comportant des instructions pour l'exécution des étapes du procédé de mesure du diamètre équivalent d'une goutte d'eau selon l'une quelconque des revendications 1 à 5 lorsque ledit programme est exécuté par ordinateur.

7. Support d'enregistrement lisible par un ordinateur sur lequel est enregistré un programme d'ordinateur comprenant des instructions pour l'exécution des étapes du procédé de mesure du diamètre équivalent d'une goutte d'eau selon l'une quelconque des revendications 1 à 5.

8. Dispositif de mesure du diamètre équivalent d'une goutte d'eau, ledit dispositif comprenant :

- un module (5B1) d'obtention d'un premier signal d'intensité lumineuse ($SIG_1$) selon un angle déterminé ($\theta$) dans un plan horizontal défini par l'axe ($D_L$) d'une source laser (2) et un module (5B2) d'obtention d'un deuxième signal d'intensité lumineuse ($SIG_2$) selon ledit angle déterminé ($\theta$) dans un plan vertical défini par ledit axe de ladite source laser (2), lesdits intensités lumineuses étant modulées par le passage de ladite goutte d'eau au travers d'au moins deux faisceaux laser émis par ladite source laser (2) de sorte que lesdits au moins deux faisceaux soient horizontaux, parallèles et verticalement espacés d'une distance prédéterminée (d), lesdits signaux d'intensité étant acquis par des récepteurs optiques (3, 4) positionnés de sorte que les angles formés

par l'axe (DO$_1$, DO$_2$) desdits récepteurs optiques et l'axe de ladite source laser (D$_L$) soient égaux audit angle déterminé ($\theta$);

- un module (5B3) de mesure d'un premier décalage temporel ($\Delta_1$) entre les deux plus grands maxima d'intensité d'un desdits signaux d'intensité ;

- un module (5B4) de mesure d'un deuxième décalage temporel ($\Delta_2$) entre ledit premier et ledit deuxième signal d'intensité ;

- un module (5B5, 5'B5) de calcul du diamètre équivalent de ladite goutte d'eau à partir d'un modèle ellipsoïdal de ladite goutte d'eau sous la forme d'un ellipsoïde dont le grand axe (A) est parallèle au plan horizontal d'émission desdits au moins deux faisceaux laser, d'une loi reliant le rapport des deux axes dudit modèle ellipsoïdal au diamètre équivalent dudit modèle ellipsoïdal, ladite loi n'associant pas une constante audit rapport (a) quel que soit ledit diamètre équivalent dudit modèle ellipsoïdal, dudit premier et dudit deuxième décalage temporel.

9. Disdromètre comprenant un dispositif de mesure du diamètre équivalent d'une goutte d'eau selon la revendication 8.

**Patentansprüche**

1. Verfahren zum Messen des äquivalenten Durchmessers ($D_{eq}$) eines Wassertropfens, wobei das Verfahren Folgendes umfasst:

   - einen Schritt (E100, F100) des Erhaltens eines ersten Leuchtstärkesignals (SIG$_1$, SIG$_1$') gemäß einem bestimmten Winkel ($\theta$) in einer horizontalen Ebene, die von der Achse (D$_L$) einer Laserquelle (2) definiert wird, und einen Schritt (E200, F200) des Erhaltens eines zweiten Leuchtstärkesignals (SIG$_2$, SIG$_2$') gemäß dem bestimmten Winkel ($\theta$) in einer vertikalen Ebene, die von der Achse der Laserquelle (2) definiert ist, wobei die Leuchtstärken durch das Durchgehen des Wassertropfens durch mindestens zwei Laserstrahlen (f$_1$, f$_2$), die von der Laserquelle (2) gesendet werden, moduliert werden, so dass die mindestens zwei Strahlen horizontal, parallel und vertikal um einen vorbestimmten Abstand (d) beabstandet sind, wobei die Stärkesignale von optischen Empfängern (3, 4) erfasst werden, die derart positioniert sind, dass die Winkel, die von der Achse (DO$_1$, DO$_2$) der optischen Empfänger und der Achse der Laserquelle (D$_L$) gebildet werden, gleich dem bestimmten Winkel ($\theta$) sind;
   - einen Schritt (E300, F300) des Messens einer ersten zeitlichen Verzögerung ($\Delta_1$) zwischen den zwei größten Stärkenmaxima eines der Stärkesignal;
   - einen Schritt (E400, F400) des Messens einer zweiten zeitlichen Verzögerung ($\Delta_2$) zwischen dem ersten (SIG1, SIG2') und dem zweiten (SIG2, SIG2') Stärkesignal;
   - einen Schritt (E500, F500-F600) des Berechnens des äquivalenten Durchmessers ($D_{eq}$) des Wassertropfens ausgehend von einem ellipsoidalen Modell des Wassertropfens in Form eines Ellipsoids, dessen große Achse (A) zu der horizontalen Sendeebene der mindestens zwei Laserstrahlen parallel ist, eines Gesetzes, das das Verhältnis (a) der zwei Achsen (A, B) des ellipsoidalen Modells mit dem äquivalenten Durchmesser des ellipsoidalen Modells verknüpft, wobei das Gesetz mit dem Verhältnis (a) ungeachtet des äquivalenten Durchmessers des ellipsoidalen Modells keine Konstante der ersten ($\Delta_1$) und der zweiten ($\Delta_2$) zeitlichen Verzögerung assoziiert.

2. Verfahren nach Anspruch 1, wobei der Berechnungsschritt (E500) die Bewertung an einer Stelle einer Funktion umfasst, die den äquivalenten Durchmesser mit einer vertikalen Verzögerung ($h_\theta$) verknüpft, wobei die vertikale Verzögerung als der Abstand zwischen der großen horizontalen Achse (A) des ellipsoidalen Modells des Wassertropfens und der horizontalen Sendeebene der Laserstrahlen (f$_1$, f$_2$), für die die Laserstrahlen gemäß dem vorbestimmten Winkel ($\theta$) in der vertikalen Ebene gebrochen werden, definiert ist.

3. Verfahren nach Anspruch 2, wobei die Funktion ein Polynom ist, das durch Polynomannäherung der theoretischen Kurve, die den äquivalenten Durchmesser mit der vertikalen Verlagerung ($h_\theta$) verbindet, erhalten wird.

4. Verfahren nach einem der Ansprüche 2 bis 3, wobei der Punkt gleich

$$d * \frac{\Delta_2}{\Delta_1}$$

ist, und wobei:

d der vorbestimmte Abstand zwischen den mindestens zwei Laserstrahlen ist;
$\Delta_1$ die erste zeitliche Verzögerung ist, und
$\Delta_2$ die zweite zeitliche Verzögerung ist.

5. Verfahren nach Anspruch 1, wobei der Berechnungsschritt (F500-F600) Folgendes umfasst:

- einen Berechnungsschritt (F500) des sphärischen Durchmessers des Wassertropfens ausgehend von einem sphärischen Modell des Wassertropfens, der ersten und zweiten zeitlichen Verzögerung;
- einen Berechnungsschritt (F600) des äquivalenten Durchmessers des Tropfens durch Polynominalkorrektur des sphärischen Durchmessers.

6. Computerprogramm, das Anweisungen für die Ausführung der Schritte des Messverfahrens des äquivalenten Durchmessers eines Wassertropfens nach einem der Ansprüche 1 bis 5 umfasst, wenn das Programm von dem Computer ausgeführt wird.

7. Computerlesbarer Aufzeichnungsträger, auf dem ein Computerprogramm aufgezeichnet ist, das Anweisungen für die Ausführung der Schritte des Messverfahrens des äquivalenten Durchmessers eines Wassertropfens nach einem der Ansprüche 1 bis 5 umfasst.

8. Messvorrichtung des äquivalenten Durchmessers eines Wassertropfens, wobei die Vorrichtung Folgendes umfasst:

- ein Modul (5B1) zum Erhalten eines ersten Leuchtstärkesignals ($SIG_1$) gemäß einem bestimmten Winkel ($\theta$) in einer horizontalen Ebene, die von der Achse ($D_L$) einer Laserquelle (2) definiert ist, und ein Modul (5B2) zum Erhalten eines zweiten Leuchtstärkesignals ($SIG_2$) gemäß dem bestimmten Winkel ($\theta$) in einer vertikalen Ebene, die von der Achse der Laserquelle (2) definiert ist, wobei die Leuchtstärken durch das Durchgehen des Wassertropfens durch mindestens zwei Laserstrahlen, die von der Laserquelle (2) gesendet werden, moduliert werden, so dass die mindestens zwei Laserstrahlen horizontal, parallel und vertikal um einen vorbestimmten Abstand (d) beabstandet sind, wobei die Stärkesignale von optischen Empfängern (3, 4) empfangen werden, die derart positioniert sind, dass die Winkel, die von der Achse ($DO_1$, $DO_2$) und dem optischen Empfänger und der Achse der Laserquelle ($D_L$) gebildet werden, gleich dem vorbestimmten Winkel ($\theta$) sind;
- ein Messmodul (5B3) einer ersten zeitlichen Verzögerung ($\Delta_1$) zwischen den zwei größten Stärkenmaxima eines der Stärkesignale;
- ein Modul (5B4) zum Messen einer zweiten zeitlichen Verzögerung ($\Delta_2$) zwischen dem ersten und dem zweiten Stärkesignal;
- ein Modul (5B5, 5'B5) zum Berechnen des äquivalenten Durchmessers des Wassertropfens ausgehend von einem ellipsoidalen Modell des Wassertropfens in der Form eines Ellipsoids, dessen große Achse (A) zu der horizontalen Sendeebene der mindestens zwei Laserstrahlen parallel ist, eines Gesetzes, das das Verhältnis der zwei Achsen des ellipsoidalen Modells mit dem äquivalenten Durchmesser des ellipsoidalen Modells verbindet, wobei das Gesetz ungeachtet des äquivalenten Durchmessers des ellipsoidalen Modells keine Konstante mit dem Verhältnis (a) der ersten und der zweiten zeitlichen Verzögerung verbindet.

9. Disdrometer, das eine Vorrichtung zum Messen des äquivalenten Durchmessers eines Wassertropfens nach Anspruch 8 umfasst.

**Claims**

1. A method for measuring the equivalent diameter ($D_{eq}$) of a drop of water, said method comprising:

- a step (E100, F100) of obtaining a first light intensity signal ($SIG_1$, $SIG_1$') at a determined angle ($\theta$) in a horizontal plane defined by the axis ($D_L$) of a laser source (2) and a step (E200, F200) of obtaining a second light intensity signal ($SIG_2$, $SIG_2$') at said determined angle ($\theta$) in a vertical plane defined by said axis of said laser source (2), said light intensities being modulated by the passage of said drop of water through at least two laser beams ($f_1$, $f_2$) emitted by said laser source (2) so that said at least two beams are horizontal, parallel and vertically spaced apart by a predetermined distance (d), said intensity signals being acquired by optical receivers (3, 4) positioned so that the angles formed by the axis ($DO_1$, $DO_2$) of said optical receivers and the axis of said laser source ($D_L$) are equal to said determined angle ($\theta$);
- a step (E300, F300) of measuring a first time-shift ($\Delta_1$) between the two largest intensity maxima of one of said intensity signals;
- a step (E400, F400) of measuring a second time-shift ($\Delta_2$) between said first ($SIG_1$, $SIG_1$') and said second ($SIG_2$, $SIG_2$') intensity signal;
- a step (E500, F500-F600) of calculating the equivalent diameter ($D_{eq}$) of said drop of water from an ellipsoidal model of said drop of water in the form of an ellipsoid whose major axis (A) is parallel to the horizontal emission plane of said at least two laser beams, a law connecting the ratio (a) of the two axes (A, B) of said ellipsoidal model to the equivalent diameter of said ellipsoidal model, said law associating no constant to said ratio (a) regardless of said equivalent diameter of said ellipsoidal model, said first ($\Delta_1$) and said second ($\Delta_2$) time-shift.

2. The method according to claim 1 wherein said calculation step (E500) comprises the evaluation at one point of a function connecting the equivalent diameter to a vertical shift ($h_\theta$), said vertical shift being defined as the distance between the large horizontal axis (A) of said ellipsoidal model of said drop of water and the horizontal emission plane of said laser beams ($f_1$, $f_2$) for which said laser beams are refracted at said determined angle ($\theta$) in said vertical plane.

3. The method according to claim 2 wherein said function is a polynomial obtained by polynomial approximation of the theoretical curve connecting the equivalent diameter to said vertical shift ($h_\theta$).

4. The method according to any of claims 2 to 3 wherein said point is equal to

$$d * \frac{\Delta_2}{\Delta_1}$$

and where:

$d$ is said predetermined distance between said at least two laser beams;
$\Delta_1$ is said first time-shift; and
$\Delta_2$ is said second time-shift.

5. The method according to claim 1 wherein said calculation step (F500-F600) comprises:

- a step (F500) of calculating the spherical diameter of said drop of water from a spherical model of said drop of water, said first and said second time-shift;
- a step (F600) of calculating the equivalent diameter of said drop by polynomial correction of said spherical diameter.

6. A computer program including instructions for the execution of the steps of the method for measuring the equivalent diameter of a drop of water according to any one of claims 1 to 5 when said program is executed by a computer.

7. A computer-readable recording medium on which is recorded a computer program comprising instructions for the execution of the steps of the method for measuring the equivalent diameter of a drop of water according to any one of claims 1 to 5.

8. A device for measuring the equivalent diameter of a drop of water, said device comprising:

- a module (5B1) for obtaining a first light intensity signal ($SIG_1$) at a given angle ($\theta$) in a horizontal plane defined by the axis ($D_L$) of a laser source (2) and a module (5B2) for obtaining a second light intensity signal ($SIG_2$) at said determined angle ($\theta$) in a vertical plane defined by said axis of said laser source (2), said light intensities being modulated by the passage of said drop of water through at least two laser beams emitted by said laser source (2) so that said at least two beams are horizontal, parallel and vertically spaced apart by a predetermined distance (d), said intensity signals being acquired by optical receivers (3, 4) positioned so that the angles formed by the axis ($DO_1$, $DO_2$) of said optical receivers and the axis of said laser source ($D_L$) are equal to said determined angle ($\theta$);
- a module (5B3) for measuring a first time-shift ($\Delta_1$) between the two largest intensity maxima of one of said intensity signals;

- a module (5B4) for measuring a second time-shift ($\Delta_2$) between said first and said second intensity signal;
- a module (5B5, 5'B5) for calculating the equivalent diameter of said drop of water from an ellipsoidal model of said drop of water in the form of an ellipsoid whose major axis (A) is parallel to the horizontal emission plane of said at least two laser beams, a law connecting the ratio of the two axes of said ellipsoidal model to the equivalent diameter of said ellipsoidal model, said law associating no constant to said ratio (a) regardless of said equivalent diameter of said ellipsoidal model, said first and said second time-shift.

9. A disdrometer comprising a device for measuring the equivalent diameter of a drop of water according to claim 8.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2013205890 A1
- US 4781460 A
- US 2008221711 A1
- EP 1083423 A2

**Littérature non-brevet citée dans la description**

- **ANTON KRUGER et al.** Two-Dimensional Video Disdrometer: A Description. *JOURNAL OF ATMOSPHERIC AND OCEANIC TECHNOLOGY,* 01 Mai 2002, vol. 19 (5), 602-617
- **BATTAGLIA et al.** PARSIVEL Snow Observations : A Critical Assessment. *Journal of Atmospheric and Oceanic Technology,* 2010, vol. 27 (2), 333-344
- **ANDSAGER et al.** Laboratory Measurements of Axis Ratios for Large Raindrops. *Journal of the Atmospheric Sciences,* 1999, vol. 56 (15), 2673-2683